# FASCICULE DE BREVET EUROPEEN

(11) **EP 2 890 547 B1**
(45) Date de publication et mention de la délivrance du brevet: **30.08.2017**
(21) Numéro de dépôt: 13745043.3
(22) Date de dépôt: 31.07.2013
(51) Int. Cl.: B29C 67/00, B22F 3/105, G05B 15/02, B33Y 30/00

(54) **MACHINE POUR LA FABRICATION DE PRODUITS CIRCULAIRES PAR ADDITION COUCHE PAR COUCHE**
MASCHINE ZUR HERSTELLUNG RUNDER PRODUKTE DURCH SUKZESSIVE EINZELSCHICHTHINZUFÜGUNG
MACHINE FOR PRODUCING CIRCULAR PRODUCTS BY MEANS OF LAYER-BY-LAYER ADDITION

(30) Priorité: 29.08.2012 FR 1202318
(43) Date de publication de la demande: 08.07.2015
(73) Titulaire: Carpyz SAS, 92136 Issy les Moulineaux (FR)
(72) Inventeur: CARROUSET, Pierre, F-75015 Paris (FR); CARROUSET, Nicole, F-75015 Paris (FR); CARROUSET, Gabrielle, F-75015 Paris (FR)
(74) Mandataire: Dennemeyer & Associates S.A.
(86) Numéro de dépôt international: PCT/EP2013/066083
(87) Numéro de publication internationale: WO 2014/032895

(56) Documents cités:
- EP-A1- 1 358 994
- DE-A1- 10 235 434
- JP-A- 2001 347 572

## Description

La difficulté rencontrée sur les machines de frittage de poudre couche par couche actuelles est leurs faibles capacités du fait du balayage linéaire alternatif de l'aire de travail qui est un handicape car les allers et retours demandent du temps ce qui est pénalisant pour les pièces circulaires de grand diamètre et d'autre part parce que le refroidissement des pièces produites dans les bacs est très long.

La température des couches déposées n'est pratiquement pas contrôlée ni régulée en continu ce qui oblige à un certain temps pour le refroidissement avant de pouvoir appliquer de nouvelles couches et aussi après pour extraire les pièces terminées du bac qui les contient.

Le principe de la construction par empilage couche par couche est naturel et a été employé de tous temps pour la construction dans le bâtiment même avant les pyramides d'Egypte.

Il est maintenant permis de construire des produits de formes hélicoïdales très complexes avec des couches de plus en plus fines, qui étaient jadis impossible à fabriquer avec les outils de l'époque, grâce aux progrès techniques cumulés simultanément dans tous les domaines :
- la précision de la construction mécanique,
- la polymérisation de résine, le frittage de poudre par laser, la découpe de feuilles minces, et l'addition de matière,
- aux performances des matériels Informatiques ajoutés à celles des progiciels,
- aux possibilités des transmissions par internet des fichiers,
- aux machines qui fabriquent par couches successives en utilisant directement les fichiers reçus,
- mais aussi grâce à l'outil informatique CARPYZ, qui permet de créer rapidement en ligne de nouveaux produits de formes hélicoïdales très complexes et de les faire générer et fabriquer par l'envoie de fichiers n'importe où dans le monde, en les faisant passer quasiment instantanément du virtuel au concret.

De nombreux Brevets montrent l'intérêt porté aux machines pour la fabrication par couches : FR 2166526 de 1973, US5637 175 de 1997, EP 1358994 de 2003, WO2004 108398 de 2004, etc.

Le principe d'un plateau circulaire tournant permettant de distribuer successivement le travail à des postes placés autour du plateau est également très ancien, (machines dites transferts). La publication DE 102 35 434 A1 décrit une machine de fabrication couche par couche comprenant un bac circulaire situé à la partie inférieure qui tourne en continu ou pas à pas sur un socle fixe et une partie fixe située à la partie supérieure de la machine qui coiffe le bac et comprenant, contenue dans une portion angulaire de la surface du cercle du bac inférieur, au moins une unité de fabrication divisée elle-même en plusieurs postes successifs. Cette publication DE 102 35 434 A1 est du principe dit "transfert" et a un laser qui traite des postes successivement présentés les uns après les autres alors que, selon la présent invention, les pièces circulaires sont fabriquées elles-mêmes en rotation sur la machine dite circulaire. La présente demande se propose de résoudre les problèmes mentionnés ci-dessus en offrant une machine de fabrication couche par couche selon la revendication 1. Il est aussi remarquable que les couronnes circulaires Indépendantes (7) s'enfoncent verticalement individuellement et divisent la surface du bac en secteurs circulaires qui sont traités indépendamment par les six postes de la partie supérieure de la machine qui eux sont adaptés pour traiter individuellement chacune des couronnes.

Lorsque nécessaire la position successive des postes (1-6) est déplacée les unes par rapport aux autres.

Le bac inférieur (B) tourne de façon programmée sur un socle fixe (D) et ils sont momentanément solidarisés ensemble pour manipulations et le bac inférieur est pourvu d'anneaux de levage(9) et de basculement (8) à cet effet.

Au sol des dispositifs motorisés permettent de fixer le socle sur un point précis et stable pendant la fabrication.

A remarquer que l'ensemble de la machine est maintenue pendant les périodes de fabrication dans une enceinte étanche à atmosphère et température contrôlées et que le bac Inférieur est pourvu d'un dispositif qui permet de le tenir en légère surpression par du gaz compatible filtré prélevé dans l'atmosphère contrôlé de l'enceinte.

### Les dessins schématiques et les éléments indiqués sont fournis à titre d'exemple de façon non exhaustive.

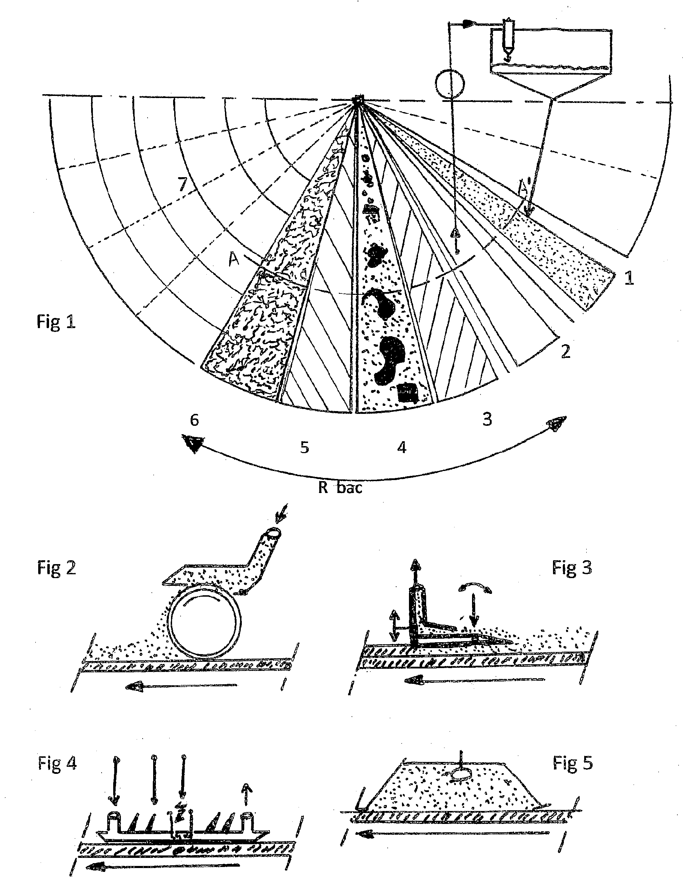

Le dessin (Fig 1) montre sur un secteur angulaire une unité de fabrication indépendante qui est elle-même divisée en plusieurs secteurs (1 à 6). Le complément des 180° du demi-cercle du dessin montre vu de dessus des couronnes circulaires dans le bac inférieur (7).

Il montre que la 1^{ère} zone distribue chaque couche de produit sur la portion de cercle complète (1) ou sur les couronnes circulaires actives choisies du bac inférieur (7) ta 2^{èn,e} égalise l'épaisseur de la couche de produit voire la comprime et récupère l'excédent de produit (2) la 3^{ème} permet de contrôler et réguler la température amont (3) la 4^{eme} c'est là que les lasers écrivent sur le produit en le faisant fondre ou qu'il est utilisé d'autres procédés qui additionnent de la matière, ou modifie la consistance du produit (4) la 5^{eme} permet de contrôler et réguler la température aval (5) et la 6^{ème} est utilisée pour additionner un produit complémentaire par pulvérisation ou imprégnation ou par présence d'un gaz ou brouillard (6).

La flèche circulaire montre le sens de rotation du bac inférieur qui est inversable. (R bac)

Selon la coupe A-A' le dessin (Fig 2) montre à titre d'exemple non limitatif un dispositif de distribution de produit, le dessin (Fig 3) montre un dispositif égalisateur de la couche de produit, le dessin (Fig 4) montre un dispositif qui permet de réguler la température, le dessin (Fig 5) montre un dispositif de pulvérisation pour l'imprégnation du produit.

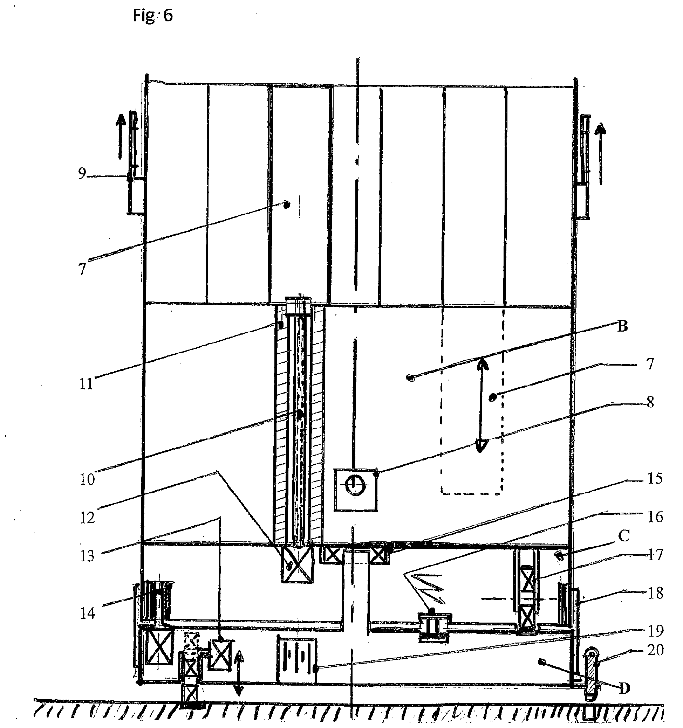

Le dessin (Fig 6) montre schématiquement de façon non exhaustive des détails de fabrication du bac inférieur (B) de sa chambre inférieure un bac circulaire (C) et du socle ( D) qui sont des éléments classiques utilisés pour la construction de machines qui ne prétendent pas à un caractère de nouveauté en eux-mêmes mais font partis d'un tout :
(8) anneau de basculement, (9) anneaux de levage, (10) vis de levage des couronnes, (11) soufflets de protection des vis, (12) moteur des vis, (13) dispositifs de levage et déplacement motorisé du socle, (14) moteur engrenage crémaillère pour rotation du bac, (15) palier central de centrage du bac sur le socle, (16) bagues de transfert d'énergie électrique, (17) roulements pour la rotation du bac sur le socle, (18) jupes anti poussières, (19) batteries pour autonomie du déplacement du socle, (20) dispositif pour blocage en position précise du socle en position de travail.

## Revendications

1. Machine de fabrication couche par couche comprenant :
un bac circulaire situé à la partie inférieure (B) qui tourne en continu ou pas à pas sur un socle fixe (D) et dont l'intérieur est pourvu de couronnes cylindriques motorisées verticalement de façon indépendantes (7) qui accueillent les couches successives, et
une partie fixe située à la partie supérieure de la machine qui coiffe le bac et comprenant , contenue dans une portion angulaire de la surface du cercle du bac inférieur, au moins une unité de fabrication divisée elle-même en plusieurs postes successifs (1-6), lesdits postes successifs (1-6) comprenant :
- un premier poste (1) qui distribue la couche de produit en partant d'un stockage,
- un deuxième poste (2) qui égalise l'épaisseur de la couche de produit voire la comprime et renvoie l'excédent de produit distribué dans le stockage,
- un troisième poste (3) qui permet de contrôler et réguler la température de la couche qui arrive avec une plaque fixe de préférence microporeuse,
- un quatrième poste (4) qui est celui ou les surfaces utiles de la couche de produit à conserver sont balayées soit par les lasers pour les faire fondre soit en projetant un additif pour les agglomérer ou autres pour modifier la consistance du produit,
- un cinquième poste (5) qui permet de contrôler et réguler la température de la couche qui vient d'être déposée à l'aide de préférence d'un cylindre creux à température contrôlée et régulée dont la périphérie tourne avec la couche, et
- un sixième poste (6) qui permet de traiter et imprégner la couche avant présentation à l'unité de fabrication suivante en additionnant un produit complémentaire par pulvérisation ou par la présence d'un gaz.

2. Machine de fabrication couche par couche selon la revendication précédente, dans laquelle les couronnes circulaires indépendantes (7) s'enfoncent verticalement individuellement et divisent la surface du bac en secteurs circulaires qui sont traités indépendamment par les six postes (1-6) de la partie supérieure de la machine qui eux sont adaptés pour traiter individuellement chacune des couronnes.

3. Machine de fabrication couche par couche selon l'une des revendications précédentes, dans laquelle la position successive des postes (1-6) est déplacée les unes par rapport aux autres.

4. Machine de fabrication couche par couche selon l'une des revendications précédentes, dans laquelle le bac inférieur(B) tourne de façon programmée sur un socle fixe (D) et ils sont momentanément solidarisés ensemble pour manipulations et le bac inférieur est pourvu d'anneaux de levage (9) et de basculement (8) à cet effet.

5. Machine de fabrication couche par couche selon l'une des revendications précédentes, dans laquelle au sol des dispositifs motorisés permettent de fixer le socle sur un point précis et stable pendant la fabrication.

6. Machine de fabrication couche par couche selon l'une des revendications précédentes, dans laquelle l'ensemble de la machine est maintenue pendant les périodes de fabrication dans une enceinte étanche à atmosphère et température contrôlées et dans laquelle le bac inférieur est pourvu d'un dispositif qui permet de le tenir en légère surpression par du gaz compatible filtré prélevé dans l'atmosphère contrôlé de l'enceinte.

## Patentansprüche

1. Maschine für die schichtweise Herstellung, umfassend:
einen kreisrunden Behälter, der sich im unteren Teil (B) befindet, der auf einem festen Sockel (D) kontinuierlich oder schrittweise dreht, und dessen Inneres vertikal mit unabhängig motorisierten zylindrischen Kränzen (7) ausgestattet ist, welche die aufeinanderfolgenen Schichten empfangen, und
einen festen Teil, der sich im oberen Teil der Maschine befindet, der den Behälter bedeckt und, enthalten in einem Winkelabschnitt der Fläche des Kreises des unteren Behälters, mindestens eine Fabrikationseinheit umfasst, die selbst in mehrere aufeinanderfolgende Posten (1-6) unterteilt ist,
wobei die aufeinanderfolgenden Posten (1-6) umfassen:
- einen ersten Posten (1), welcher die Produktschicht aus einem Lager kommend verteilt,
- einen zweiten Posten (2), welcher die Dicke der Produktschicht ausgleicht, sogar komprimiert und das überschüssige verteilte Produkt in das Lager zurückschickt,
- einen dritten Posten (3), der erlaubt, die Temperatur der Schicht, die mit einer festen, vorzugsweisen mikroporösen Platte ankommt, zu steuern und zu regulieren,
- einen vierten Posten (4), der derjenige ist, wo die Nutzflächen der zu behaltenden Produktschicht entweder von Lasern abgetastet werden, damit sie schmelzen, oder zwecks Projektion eines Zusatzes, um sie zu agglomerieren oder sonstiges, um die Konsistenz des Produkts zu verändern,
- einen fünften Posten (5), der erlaubt, die Temperatur der mit Hilfe eines hohlen Zylinders mit gesteuerter und regulierter Temperatur, dessen Peripherie mit der Schicht dreht, aufgebrachten Schicht zu steuern und zu regulieren, und
- eine sechsten Posten (6), der erlaubt, die Schicht vor der Übergabe an die folgende Fabrikationseinheit durch Hinzufügen eines komplementären Produkts durch Zerstäuben oder durch die Anwesenheit eines Gases zu bearbeiten und zu imprägnieren.

2. Maschine für die schichtweise Herstellung nach vorangehendem Anspruch, wobei sich die unabhängigen kreisförmigen Kränze (7) vertikal individuell eindrücken und die Fläche des Behälters in kreisförmige Sektoren teilen, die unabhängig von den sechs Posten (1-6) des oberen Teils der Maschine behandelt werden, die selbst ausgebildet sind, um jeden der Kränze individuell zu behandeln.

3. Maschine für die schichtweise Herstellung nach einem der vorangehenden Ansprüche, wobei die aufeinanderfolgende Position der Posten (1-6) im Verhältnis zueinander verlagert wird.

4. Maschine für die schichtweise Herstellung nach einem der vorangehenden Ansprüche, wobei der untere Behälter (B) programmiert auf seinem festen Sockel (D) dreht und sie momentan gemeinsam zwecks Betätigung fest verbunden sind und der untere Behälter zu diesem Zweck mit Hub- (9) und Kippringen (8) ausgestattet ist.

5. Maschine für die schichtweise Herstellung nach einem der vorangehenden Ansprüche, wobei auf dem Boden motorisierte Vorrichtungen erlauben, den Sockel auf einem präzisen und stabilen Punkt während der Fertigung zu befestigen.

6. Maschine für die schichtweise Herstellung nach den vorangehenden Ansprüchen wobei die Maschineneinheit während der Fabrikationsperioden in einer atmosphärendichten Box mit gesteuerter Temperatur gehalten wird und wobei der untere Behälter mit einer Vorrichtung ausgestattet ist, die erlaubt, ihn mit einem kompatiblen gefilterten Gas, entnommen aus der kontrollierten Atmosphäre der Box, in leichtem Überdruck zu halten.

## Claims

1. Machine for manufacturing layer by layer, comprising
a circular container situated in the lower part (B) that rotates continuously or stepwise on a fixed base (D) and the inside of which is provided with independently vertically motorized cylindrical crowns (7) that receive the successive layers, and
a stationary part in the upper part of the machine that caps the container and comprising, contained in an angular portion of the surface of the circle of the lower container , at least one manufacturing unit which in turn is divided into several successive sections (1-6),
said successive sections (1-6) comprising
- a first section (1) which distributes the layer of product from a store,
- a second section (2) which evens out the thickness of the layer of product or compresses it and sends the excess distributed product to the store,
- a third section (3) which makes it possible to control and regulate the temperature of the next layer with a stationary plate, which is preferably microporous,
- a fourth section (4) which is that where the useful surfaces of the layer of product to be kept are swept either by the laser to melt them or by spraying an additive to agglomerate them or other means to modify the consistency of the product,
- a fifth section (5) which makes it possible to control and regulate the temperature of the layer just deposited, preferably using a hollow cylinder with a controlled and regulated temperature whereof the periphery rotates with the layer, and
- a sixth section (6) which makes it possible to treat and impregnate the layer before presentation to the following manufacturing unit by adding a complementary product by spraying or by the presence of a gas.

2. Machine for manufacturing layer by layer according to the preceding claim, wherein the independent circular crowns (7) individually and vertically sink in and divide the surface of the container into circular sectors that are treated independently by the six stations (1-6) of the upper part of the machine, which in turn are adapted to treat each of the crowns individually.

3. Machine for manufacturing layer by layer according to any one of the preceding claims, wherein the successive positions of the stations (1-6) are moved relative to one another.

4. Machine for manufacturing layer by layer according to any one of the preceding claims, wherein the lower container (B) rotates in a programmed manner on a stationary base (D) and they are temporarily secured to each other for handling, and the lower container is provided with lifting (9) and tilting (8) rings to that end.

5. Machine for manufacturing layer by layer according to any one of the preceding claims wherein, on the floor, motorized devices make it possible to fasten the base on a specific and stable point during manufacturing.

6. Machine for manufacturing layer by layer according to any one of the preceding claims, wherein, during manufacturing periods, the entire machine is kept in a sealed, atmosphere- and temperature-controlled enclosure and the lower container is provided with a device that makes it possible to maintain a slight overpressure using a compatible filtered gas taken from the controlled atmosphere of the enclosure.
